# EUROPEAN PATENT APPLICATION

(11) **EP 4 358 222 A1**
(43) Date of publication of application: **24.04.2024**
(21) Application number: 22877865.0
(22) Date of filing: 23.09.2022
(51) Int. Cl.: H01M 10/058, H01M 10/04

(54) **COLUMN-SHAPED BATTERY CELL ROTARY INFILTRATION APPARATUS**

(30) Priority: 09.10.2021 CN 202122425208 U
(71) Applicant: Contemporary Amperex Technology Co., Limited, Ningde, Fujian 352100 (CN)
(72) Inventor: LIANG, Jingbing, Ningde, Fujian 352100 (CN); ZHUO, Shumin, Ningde, Fujian 352100 (CN); XIAO, Zhongxing, Ningde, Fujian 352100 (CN); HUANG, Caixia, Ningde, Fujian 352100 (CN); HUANG, Dengfeng, Ningde, Fujian 352100 (CN)
(74) Representative: Gong, Jinping
(86) International application number: PCT/CN2022/120862
(87) International publication number: WO 2023/056846

(57) **Abstract**

The present application is applicable to the field of battery production and manufacturing. It proposes a rotary infiltration apparatus for a columnar battery cell (1), including a battery placement mechanism (2) and a driving mechanism (2), where the battery placement mechanism (2) is configured to place a plurality of columnar battery cells (5) to be infiltrated in an array, and the driving mechanism is connected with the battery placement mechanism (2) in a transmission way and drives the battery placement mechanism (2) to drive the columnar battery cell to rotate around its cylindrical axis. The present application significantly shortens time required for battery infiltration and effectively improves production efficiency of the columnar battery cell.

## Description

The present application claims priority to Chinese Patent Application No. 202122425208.6, filed to the Chinese Patent Office on October 09, 2021 and entitled "ROTARY INFILTRATION APPARATUS FOR COLUMNAR BATTERY CELL", the entire content of which is incorporated in the present application by reference.

### TECHNICAL FIELD

The present application relates to the field of battery production technologies, and in particular, to a rotary infiltration apparatus for a columnar battery cell.

### BACKGROUND

A battery cell includes an electrode assembly and an electrolytic solution. Take a lithium-ion battery as an example, and in a production process of the lithium-ion battery, the lithium-ion battery needs to stand at high temperature after liquid injection to allow the electrolytic solution to be fully infiltrated into all parts of the battery. Only when the electrolytic solution of the lithium-ion battery is fully infiltrated into all parts inside the battery cell can battery performance be fully developed. If the electrolytic solution is not fully infiltrated, lithium evolution and black spots will occur during a charging and discharging process of the battery, causing serious safety hazards to the battery during use.

As a size of the battery gradually increases, a penetration path of the electrolytic solution becomes longer, a compaction density of an electrode sheet increases, and a penetration rate of the electrolytic solution also decreases accordingly, leading to longer time required for battery infiltration, which seriously affects production efficiency of the battery.

### TECHNICAL PROBLEM

The present application provides an infiltration apparatus for a battery, which is used to solve existing technical problems of slow electrolytic solution infiltration rate, long battery infiltration time, and low production efficiency.

### TECHNICAL SOLUTIONS

The present application provides a rotary infiltration apparatus for a columnar battery cell, including:
a battery placement mechanism configured to place a plurality of columnar battery cells to be infiltrated in an array;
a driving mechanism connected with the battery placement mechanism in a transmission way and driving the battery placement mechanism to drive the columnar battery cell to rotate around its cylindrical axis.

The above technical solution uses the battery placement mechanism to place the plurality of columnar battery cells to be infiltrated, and drives the battery placement mechanism to drive the columnar battery cell to rotate around its cylindrical axis through the driving mechanism. In this way, through cooperation between the battery placement mechanism and the driving mechanism, the columnar battery cell can rotate around its own cylindrical axis. During rotation of the columnar battery cell, an electrolytic solution provided inside the battery cell moves in all directions, such that all parts inside the columnar battery cell can be fully infiltrated, effectively improving a penetration rate of the electrolytic solution and improving production efficiency.

As an implementation of the present application, the battery placement mechanism includes a plurality of rollers provided side by side; and a recess between a pair of adjacent rollers is configured to place the columnar battery cell to be infiltrated, at least one of the pair of adjacent rollers is a driving roller, and the driving roller is connected with the driving mechanism in the transmission way and rotates around a roller shaft under the drive of the driving mechanism. The driving roller is connected with the driving mechanism through a plurality of rollers provided side by side, and the driving mechanism drives the driving roller to rotate, and then drives the columnar battery cell placed above it to rotate around its own cylindrical axis, such that the electrolytic solution can be penetrated into the all parts inside the battery cell more quickly.

As an implementation of the present application, further including: a roller position adjusting mechanism configured to adjust a height position of the roller and/or a horizontal inclination angle of the roller shaft. The height position of the roller can be adjusted by providing the roller position adjusting mechanism, an operator can adjust the height position of the roller to a height suitable for operation, such that the operator can take and place the columnar battery cell during the operation. The horizontal inclination angle of roller axis can be adjusted by providing the roller position adjusting mechanism, and during the use, the roller shaft can be set to incline to one side first, at this time, the electrolytic solution inside the battery cell will move from the higher position to the lower position, ensuring that an end of one side inside the battery cell is fully infiltrated. After infiltrating for a period of time, the operator can adjust that the roller is inclined to the other side through the roller position adjusting mechanism to ensure that an end of the other side inside he battery cell is also fully infiltrated. In this way, all parts inside the battery cell can be more fully infiltrated, covering all possible dead corners inside the battery cell.

As an implementation of the present application, the roller position adjusting mechanism further includes a roller end lifting unit, the roller end lifting unit is connected with at least one roller end of the roller and drives the connected roller end to lift. The lifting height of the roller end can be adjusted by connecting the roller end lifting unit with at least one end of the roller, which can quickly adjust the roller end to a certain height, further realizing rapid adjustment of the horizontal inclination angle of the roller shaft.

As an implementation of the present application, the roller end lifting unit includes a first roller end lifting unit and a second roller end lifting unit, the first roller end lifting unit and the second roller end lifting unit are respectively connected with two ends of the roller and independently control the lifting of each connected roller end. By setting the first roller end lifting unit and the second roller end lifting unit to be connected with the two ends of the roller, when the roller shaft needs to be inclined, it is only necessary to adjust the two ends of the roller to different heights through the first roller end lifting unit and the second roller end lifting unit, so as to realize the adjustment of the horizontal inclination angle of the roller shaft conveniently and quickly. When the roller needs to be adjusted to the predetermined height, the corresponding roller end can be adjusted to the predetermined height directly through the first roller end lifting unit and the second roller end lifting unit. In this way, the rapid adjustment of the roller height position and the horizontal inclination angle of the roller shaft can be realized.

As an implementation of the present application, the roller is a heating roller. The heating roller is a roller with a heating function, and it is provided with an electric heating cell inside. The electric heating cell can heat the columnar battery cell on the battery placement mechanism to a certain extent, thereby accelerating flow of the electrolytic solution inside the columnar battery cell, such that the electrolytic solution can flow to all parts inside the battery cell more quickly, and infiltration efficiency is improved.

As an implementation of the present application, the battery placement mechanism includes an end fixing structure configured to be detachably connected with one end of the columnar battery cell and drive the columnar battery cell detachably connected with it to rotate. During the use, one end of the columnar battery cell can be fixed by the first end fixing structure first, and then the first end fixing structure drives the columnar battery cell detachably connected with it to rotate during the rotation. During the rotation of the battery cell around the cylindrical axis, the electrolytic solution inside the battery cell will flow to all parts inside the battery cell, thereby effectively improving the infiltration efficiency of the battery cell.

As an implementation of the present application, the rotary infiltration apparatus for the columnar battery cell further includes a base body provided with a plurality of accommodating structures for placing the columnar battery cell, where the region area of the accommodating structure is larger than the radial cross section area of the columnar battery cell. In this way, during the use, when the end fixing structure fixes one end of the columnar battery cell, the other end of the columnar battery cell can be placed on the accommodating structure, and then the end fixing structure is driven to rotate, and the end fixing structure drives the columnar battery cell connected with it to rotate during the rotation, such that the electrolytic solution in the columnar battery cell can be fully infiltrated. During the rotation of the columnar battery cell, the accommodating structure on the base body can play a good role in limiting the position and prevent the columnar battery cell from separating from the end fixing structure. When all the columnar battery cells are infiltrated, only the end fixing structure at one end of the columnar battery cell needs to be removed, at this time, the other end of the columnar battery cell is still placed in the accommodating structure. Therefore, the plurality of columnar battery cells that have been infiltrated can be transported by a way of transporting the base body, which effectively improves transporting efficiency.

As an implementation of the present application, the accommodating structure is an accommodating tray, a plurality of accommodating trays are arranged in an array on the base body, and the accommodating tray is detachably connected with the base body. By detachably connecting the accommodating tray with the base body, when it is necessary to infiltrate columnar battery cells of different sizes, the accommodating tray on the base body can be replaced with a size that is suitable for the radial cross section of the columnar battery cell to be infiltrated currently, so as to meet the infiltrating requirements of the columnar battery cells of different sizes.

As an implementation of the present application, the accommodating tray protrudes from a surface of the base body, and the height of the accommodating tray is 1/4-1/2 of the total length of the columnar battery cell along the cylindrical axis. In this way, surroundings of the accommodating tray can act as a guardrail to prevent the columnar battery cell from sliding out of a predetermined region and ensure steady progress of columnar battery cell infiltrating operation or columnar battery cell transporting operation, whether in the rotation process of the columnar battery cell or in the transporting process of the columnar battery cell.

As an implementation of the present application, the accommodating structure is an accommodating groove, the accommodating groove extends from the surface of the base body to the interior of the base body, and the depth of the accommodating groove is 1/4-1/2 of the total length of the columnar battery cell along the cylindrical axis. In this way, since the accommodating groove is provided inside the base body, compared with a way of adopting the accommodating tray to place the other end of the base body, it can effectively improve space utilization.

As an implementation of the present application, the battery placement mechanism further includes a conveyor belt, the conveyor belt is provided above the columnar battery cell, the driving mechanism can drive the conveyor belt to move, and the conveyor belt can move the plurality of columnar battery cells to rotate around the cylindrical axis of the columnar battery cell. In this way, when the conveyor belt moves, it will drive the plurality of columnar battery cells to be infiltrated connected with it to rotate, so as to make the electrolytic solution inside the battery cell flow, such that each columnar battery cell to be infiltrated can be fully infiltrated.

As an implementation of the present application, the conveyor belt is configured to drive the end fixing structure to rotate. In this way, the end fixing structure can be driven to rotate through the conveyor belt, and the end fixing structure drives the columnar battery cell connected with it to rotate during the rotation, such that the electrolytic solution in the columnar battery cell can be fully infiltrated.

The above description is only an overview of technical solutions of the present application. In order to better under the technical means of the present application, it can be implemented in accordance with the content of the specification, and in order to make the above and other objectives, features and advantages of the present application more obvious and understandable, the specific embodiments of the present application are given as follows.

### BRIEF DESCRIPTION OF DRAWINGS

To describe technical solutions in embodiments of the present application more clearly, the following briefly introduces accompanying drawings required for describing the embodiments of the present application. Apparently, the accompanying drawings in the following description show merely some embodiments of the present application, and those of ordinary skill in the art may still derive other drawings from these accompanying drawings without creative efforts.
FIG. 1 is a structural schematic diagram of an infiltration apparatus for an electrolytic solution according to an embodiment of the present application;
FIG. 2 is a structural schematic diagram of a rotary infiltration apparatus for a columnar battery cell according to another embodiment of the present application;
FIG. 3 is a structural front view of a rotary infiltration apparatus for a columnar battery cell according to an embodiment of the present application;
FIG. 4 is a side view of a rotary infiltration apparatus for a columnar battery cell according to an embodiment of the present application;
FIG. 5 is a side view of a rotary infiltration apparatus for a columnar battery cell according to another embodiment of the present application;
FIG. 6 is a side view of a rotary infiltration apparatus for a columnar battery cell according to another embodiment of the present application;
FIG. 7 is a front view of a rotary infiltration apparatus for a columnar battery cell according to another embodiment of the present application;
FIG. 8 is a stereogram of a rotary infiltration apparatus for a columnar battery cell according to another embodiment of the present application;
FIG. 9 is a vertical view of a rotary infiltration apparatus for a columnar battery cell according to another embodiment of the present application_{∘}

### DESCRIPTION OF REFERENCE SIGNS

10. Infiltration apparatus for electrolytic solution; 110. Rotary apparatus; 120. Battery tray; 130. Controller; 140. Bracket; 1. Rotary infiltration apparatus for columnar battery cell; 2. Battery placement mechanism; 21. Roller; 211. First roller end; 212. Second roller end; 22. End fixing structure. 3. Roller position adjusting mechanism; 31. Roller end lifting unit; 311. First roller end lifting unit; 312. Second roller end lifting unit; 4. Base body; 41. Accommodating structure; 5. Columnar battery cell; 7. Conveyor belt.

### EMBODIMENTS OF THE PRESENT INVENTION

The following describes embodiments of technical solutions of the present application with reference to accompanying drawings in detail. The following embodiments are intended only for describing the technical solutions of the present application, and therefore are only examples, but not for limiting the protection scope of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the specification and the claims of the present application as well as the brief description of the drawings described above are intended to cover non-exclusive inclusion.

In the description of the embodiments of the present application, the technical terms "first" and "second" are only intended for distinguishing different objects, and shall not be understood as an indication or implication of relative importance or implicit indication of the quantity, specific order or primary and secondary relationship of indicated technical features,. In the description of the embodiments of the present application, "a plurality of' refers to two or more, unless otherwise specifically defined.

"Embodiments" referred to herein means that the description of specific features, structures, and characteristics in combination with the embodiments are included in at least an embodiment of the present application. The phrase at various locations in the specification does not necessarily refer to the same embodiment, or an independent or alternative embodiment exclusive of other embodiments. Those skilled in the art should explicitly and implicitly understand that the embodiments described herein may be in combination with other embodiments.

In the description of the embodiments of the present application, the term "and/or" describes only an association relationship for describing associated objects and represents that three relationships may exist. For example, A and/or B may represent the following three cases: only A exists, both A and B exist, and only B exists. In addition, the character "/" herein generally indicates an "or" relationship between the associated objects.

In the description of the embodiments of the present application, the term "a plurality of' refers to two or more (including two), similarly, "a plurality of groups" refers to two or more groups (including two groups), and "a plurality of sheets" refers to two or more sheets (including two sheets).

In the description of the embodiments of the present application, orientations or positional relationships indicated by technical terms such as "center", "longitudinal", "crosswise", "length", "width", "thickness", "up", "down", "front", "rear", "left", "right", "vertical", "horizontal", "top", "bottom", "inside", "outside", "clockwise", "counterclockwise", "axial direction", "radial direction" and "circumferential direction" are orientations or positional relationships shown based on the drawings, and the terms are merely for convenience of describing the embodiments of the present application and for simplifying the description, but not for indicating or implying that an indicated apparatus or element must have a specific orientation, and must be constructed and operated in a specific orientation, which thus may not be understood as limiting the embodiments of the present application.

In the description of the embodiments of the present invention, unless otherwise explicitly specified and defined, the technical terms "mounting", "connecting", "connection" and "fixing" should be understood in a broad sense, for example, they may be a fixed connection, a detachable connection, or an integrated connection; may also be a mechanical connection, or may be an electrical connection; may be a direct connection; may also be an indirect connection via an intermediate medium, or may be communication between the interiors of two elements or the interaction between two elements. For those of ordinary skill in the art, the specific meanings of the above terms in the embodiments of the present application can be understood according to specific circumstances.

A battery mentioned in the embodiments of the present application refers to a single physical module that includes one or more battery cells to provide a higher voltage and capacity. A battery cell may include a lithium-ion secondary battery, a lithium-ion primary battery, a lithium-sulfur battery, a sodium/lithium-ion battery, a sodium-ion battery or a magnesium-ion battery, and the like, which is not limited by the embodiments of the present application. In the embodiments, a shape of the battery cell is columnar, which is convenient for its rotation and infiltration.

A battery cell includes an electrode assembly and an electrolytic solution. Take a lithium-ion battery as an example, and in a production process of the lithium-ion battery, it is necessary to allow the electrolytic solution to be fully infiltrated into every corner inside the battery cell through a way of standing after liquid injection of the lithium-ion battery, so as to give full play to battery performance. If the electrolytic solution is not fully infiltrated inside the battery cell, lithium evolution and black spots will occur during a charging and discharging process of the battery, causing serious safety hazards to the battery during use. The inventors noted that as a size of the battery gradually increases, a penetration path of the electrolytic solution becomes longer, a compaction density of an electrode sheet increases, and the penetration rate of the electrolytic solution also decreases accordingly, leading to longer time required for battery infiltration, which seriously affects production efficiency of the battery.

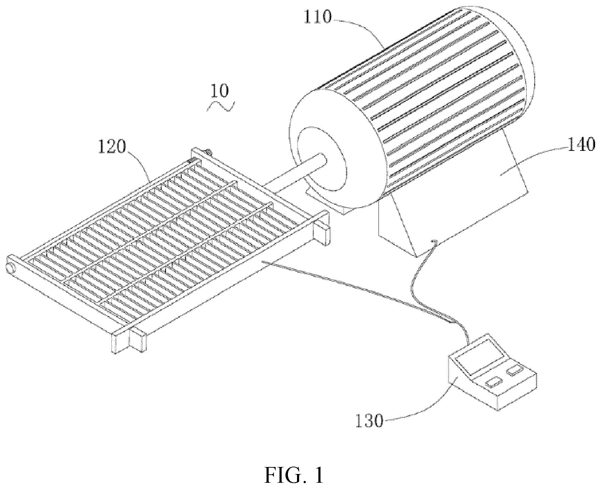

As shown in FIG. 1, in order to solve a problem of insufficient electrolytic solution infiltration inside the battery cell, an infiltration apparatus for an electrolytic solution 10 of a battery is proposed. The infiltration apparatus for the electrolytic solution 10 of the battery includes: a rotary apparatus 110, a battery tray 120, and a controller 130, where the rotary apparatus 110 is provided on a bracket 140, the rotary apparatus 110 includes a motor and a rotation shaft, and a rotor of the motor is connected with the rotation shaft; the battery tray 120 is connected with one end of the rotation shaft, and the battery tray 120 is provided with a plurality of slots for placing the battery cell; and the controller 130 is respectively connected with the motor.

In the above solution, a plurality of battery cells are placed by setting the plurality of slots in the battery tray 120. The battery tray 120 is connected with one end of the rotation shaft. During the use, the motor drives the rotation shaft to rotate, and then drives the plurality of battery cells placed in the battery tray 120 to rotate in a circle around the rotation shaft, thereby ensuring that the electrolytic solution fully flow in the battery cell, so as to complete infiltration of the battery. However, the inventors noted that the method of battery infiltration has at least the following disadvantages: (1) the plurality of slots need to be set on the battery tray 120 to clip in the battery cell, which is inconvenient to take and place the battery; (2) the battery tray 120 on which the battery cell is placed rotates in a circle around the rotation shaft of the motor, which will lead to slow rotation speed of the battery cell near the rotation shaft, and there is a dead angle of infiltration inside, resulting in decrease of infiltration efficiency.

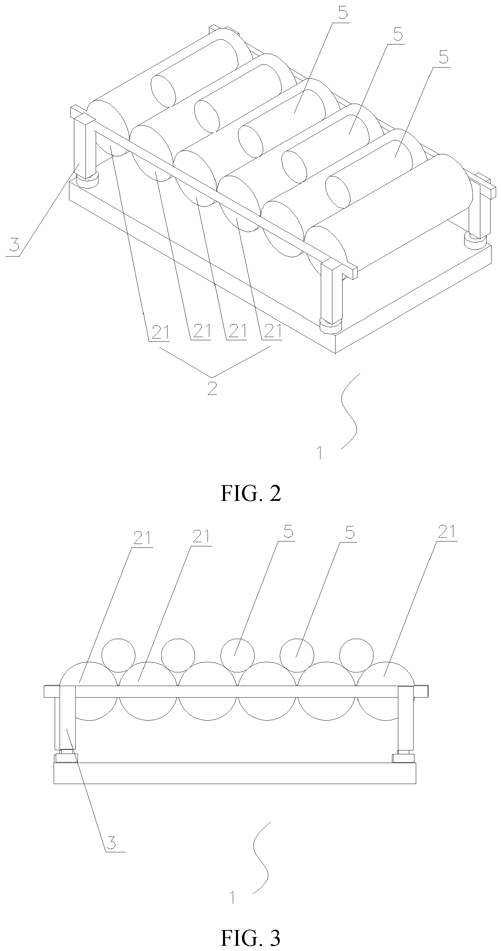

Based on the above considerations, the present application proposes a rotary infiltration apparatus for a columnar battery cell 1. Please refer to FIGS. 2 to 3, the rotary infiltration apparatus for the columnar battery cell 1 includes a battery placement mechanism 2 and a driving mechanism, where the battery placement mechanism 2 is configured to place a plurality of columnar battery cells 5 to be infiltrated in an array, and the driving mechanism is connected with the battery placing mechanism 2 and drives the battery placing mechanism 2 to drive the columnar battery cell 5 to rotate around its cylindrical axis.

Generally, the electrolytic solution inside the columnar battery cell will stand at a lower position inside the battery cell due to its own gravity, which causes the electrolytic solution inside the battery cell to have a problem of uneven and insufficient infiltration, that is, an infiltration effect at the lower position inside the battery cell is better than that at the upper position, and the problem can be well solved by the rotary infiltration apparatus for the columnar battery cell 1 of the present application.

Specifically, when using the rotary infiltration apparatus for the columnar battery cell 1 of the present application, the plurality of columnar battery cells 5 can be placed in the battery placement mechanism 2 in the array, then the driving mechanism is be opened, and the driving mechanism drives the battery placement mechanism 2 to drive the columnar battery cell 5 to rotate around its cylindrical axis. During rotation of the columnar battery cell 5 around its own cylindrical axis, the electrolytic solution inside the battery cell continuously flows from the lower position to the upper position, and then from the upper position to the lower position. This repeatedly ensures that the electrolytic solution can be fully infiltrated into all corners inside the battery cell, effectively improving the infiltration efficiency of the battery.

In the actual process, the rotation speed of the battery placement mechanism 2 can be adjusted by controlling the rotation speed of the driving mechanism to drive the rotation speed of the plurality of columnar battery cells 5. Preferably, the rotation speed of the driving mechanism can be set to a uniform speed, such that the battery placement mechanism 2 drives the plurality of columnar battery cells 5 to rotate at the uniform speed, which can make the electrolytic solution be infiltrated more evenly inside the columnar battery cell.

When there is a large number of columnar battery cells that need to be infiltrated, they can be placed on the battery placement mechanism 2 in the array first. The driving mechanism only needs to drive the battery placement mechanism 2 to rotate, which can drive all columnar battery cells placed on the battery placement mechanism 2 to rotate around its cylindrical axis, effectively improving the production efficiency.

In the embodiments, the battery placement mechanism 2 refers to a mechanism that can place the plurality of columnar battery cells. The driving mechanism is a mechanism that can drive the battery placement mechanism 2 to rotate, which can be a hydraulic driving mechanism, a pneumatic driving mechanism, an electrical driving mechanism, a mechanical driving mechanism, and the like.

The above technical solution first place the plurality of columnar battery cells 5 to be infiltrated through the battery placement mechanism 2, then uses the driving mechanism to make the battery placement mechanism 2 drive the columnar battery cell 5 to rotate around its cylindrical axis. In this way, through cooperation between the battery placement mechanism 2 and the driving mechanism, it is possible to realize the rotation of the plurality of battery cells 5 around its own cylindrical axis, thereby accelerating flow of the electrolytic solution inside the plurality of columnar battery cells 5, ensuring that the electrolytic solution can flow to all corners inside the columnar battery cell as much as possible, significantly reducing time required for battery infiltration, and effectively improving the production efficiency of the columnar battery cell. In addition, the columnar battery cell 5 rotates around its cylindrical axis. Compared with a circular rotation around the rotation shaft, it can make the electrolytic solution be infiltrated more evenly inside the battery cell, ensuring that all parts inside each columnar battery cell can be fully infiltrated. At the same time, the battery placement mechanism 2 is provided to place the plurality of columnar battery cells 5 in the array, which is convenient to take and place and easy to operate.

In some embodiments, as shown in FIGS. 2 to 6, the battery placement mechanism 2 includes a plurality of rollers 21 provided side by side; and a recess between a pair of adj acent rollers 21 is configured to place the columnar battery cell 5 to be infiltrated, at least one of the pair of adjacent rollers 21 is a driving roller, and the driving roller is connected with the driving mechanism in a transmission way and rotates around a roller shaft under the drive of the driving mechanism, further drives the plurality of columnar battery cells placed above it to rotate around its own cylindrical axis .

The roller is a kind of cylindrical part that can rotate on a machine. The roller can be either solid or hollow, and the roller surface can be smooth or rough. As long as the cylindrical parts can rotate on the machine, they all are within the protection scope of the embodiments.

In the practical application process, two rollers in the pair of adjacent rollers can be set as driving rollers, that is, two rollers in the pair of adjacent rollers are connected with the driving mechanism and can rotate around the roller shaft under a driving effect of the driving mechanism. The columnar battery cell 5 is placed in the recess between the pair of adjacent rollers 21, and the pair of adjacent rollers rotate in the same direction, driving the columnar battery cell in the recess between the two to rotate around its own cylindrical axis along a rotation direction of the roller, such that the electrolytic solution inside the columnar battery cell can be penetrated into all parts inside the battery cell more quickly.

In other embodiments, only one of the pair of adjacent rollers 21 is the driving roller and the other is the driven roller. The driving roller is connected with the driving mechanism in the transmission way, and can rotate around the roller shaft under the driving effect of the driving mechanism. The driven roller is not connected with the driving mechanism in the transmission way and rotates under the drive of the driving roller. During the use, the columnar battery cell 5 can be placed in the recess between the adjacent driving roller and the driven roller. The driving roller drives the driven roller to rotate along a certain direction, and then drives the columnar battery cell in a recess position between the two to rotate around its own cylindrical axis along the rotation direction of the roller, such that the electrolytic solution inside the columnar battery cell can be penetrated into all parts inside the battery cell more quickly.

In other embodiments, if the two adjacent rollers are regarded as a roller unit, the battery placement mechanism 2 can include a plurality of roller units provided side by side. When the roller unit includes one driving roll and one driven roll, the rotation direction of one part of roller units and the other part of roller units of the battery placement mechanism 2 can be the same or different during the use. For example, there are five rollers with serial numbers 1-5 provided side by side from left to right, among which, rollers with serial numbers 1 and 2 form a first roller unit, rollers with serial numbers 4 and 5 form a second roller unit, rollers with serial numbers 1 and 4 are driving rollers, and rollers with serial numbers 2 and 5 are driven rollers, so the rotation direction of a first roller unit and a second roller unit can be the same or different. If the first roller unit rotates clockwise, the second roller unit rotates counterclockwise; or the first roller unit rotates counterclockwise, and the second roller unit rotates clockwise; or the first roller unit and the second roller unit both rotate clockwise or counterclockwise to meet the requirements of different application scenarios.

In some embodiments, the rotary infiltration apparatus for the columnar battery cell 1 further includes a roller position adjusting mechanism 3. The roller position adjusting mechanism 3 is configured to adjust a height position of the roller and/or a horizontal inclination angle of the roller shaft. Specifically, the horizontal inclination angle refers to an angle between the roller shaft and a horizontal line or horizontal plane. When the roller position adjusting mechanism 3 adjusts the height of the roller to make the height of one roller end higher than the height of the other roller end, the roller shaft and the horizontal plane have a certain angle, that is, the horizontal inclination angle of the roller shaft. A size of the horizontal inclination angle of the roller shaft will affect a flow trend of the electrolytic solution in the columnar battery cell. The greater the horizontal inclination angle of the roller shaft, the faster the electrolytic solution in the columnar battery cell will flow to a low place. For example, the roller includes a first roller end 211 and a second roller end 212. The first roller end 211 is a left end of the roller, and the second roll end 212 is a right end of the roller. When the two roller ends are adjusted to be high on the left and low on the right, due to an effect of gravity, the electrolytic solution in the columnar battery cell will flow from left to right, ensuring that a right side inside the columnar battery cell is fully infiltrated. On the contrary, when the two roller ends are adjusted to be low on the left and high on the right, due to the effect of the gravity, the electrolytic solution in the columnar battery cell will flow from right to left, ensuring that a left side inside the columnar battery cell is fully infiltrated.

The height position of the roller is adjusted by providing the roller position adjusting mechanism 3, an operator can adjust the height position of the roller to a height suitable for operation, such that the operator can take and place the columnar battery cell during the operation. The horizontal inclination angle of roller axis can be adjusted by providing the roller position adjusting mechanism 3, and during the use, the roller shaft can be set to incline to one side first, at this time, the electrolytic solution inside the battery cell will move from the higher position to the lower position, ensuring that an end of one side inside the battery cell is fully infiltrated. After infiltrating for a period of time, the operator can adjust that the roller is inclined to the other side through the roller position adjusting mechanism 3 to ensure that an end of the other side inside he battery cell is also fully infiltrated. In this way, all parts inside the battery cell can be more fully infiltrated, covering all possible dead corners inside the battery cell.

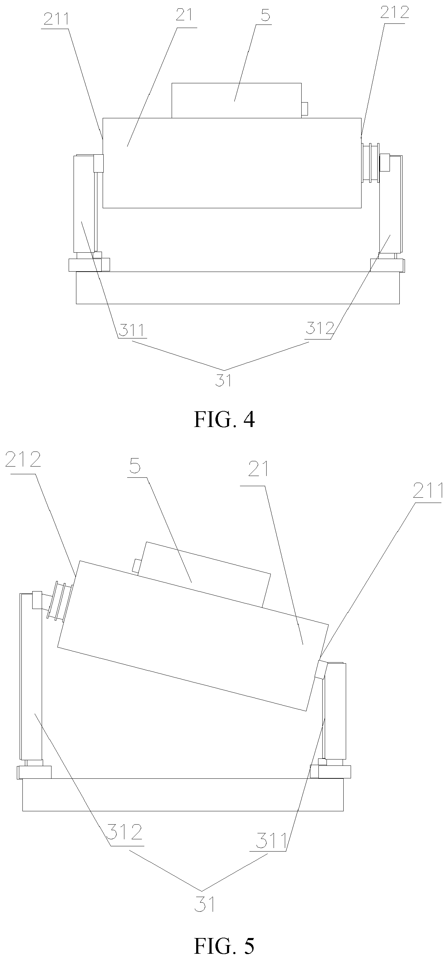

As shown in FIGS. 4-6, in some embodiments, the roller position adjusting mechanism 3 includes a roller end lifting unit 31, the roller end lifting unit 31 is connected with at least one roller end of the roller and drives the connected roller end to lift. When the roller end lifting unit 31 is only connected with one end of the roller, the roller end lifting unit 31 can adjust the height position or the horizontal inclination angle of the roller by controlling the height position of the roller end connected with it. When the roller end lifting unit 31 is connected with two ends of the roller, the height of two roller ends connected with it can be adjusted through the roller end lifting unit 31. When the height of the two roller ends is adjusted to different positions, the roller shaft naturally presents a certain horizontal inclination angle. In this way, the lifting height of the roller end can be adjusted by connecting the roller end lifting unit 31 with at least one end of the roller, which can quickly adjust the roller end to a certain height, further realizes rapid adjustment of the horizontal inclination angle of the roller shaft.

In some embodiments, the roller end lifting unit 31 includes a first roller end lifting unit 311 and a second roller end lifting unit 312, the first roller end lifting unit 311 and the second roller end lifting unit 312 are respectively connected with two ends of the roller 21 and independently control the lifting of each connected roller end. By setting the first roller end lifting unit 311 and the second roller end lifting unit 312 to be connected with the two ends of the roller, when the roller shaft needs to be inclined, it is only necessary to adjust the two ends of the roller to different heights through the first roller end lifting unit 311 and the second roller end lifting unit 312, so as to realize the adjustment of the horizontal inclination angle of the roller shaft conveniently and quickly. When the roller needs to be adjusted to the predetermined height, the corresponding roller end can be adjusted to the predetermined height directly through the first roller end lifting unit 311 and the second roller end lifting unit 312. In this way, the rapid adjustment of the roller height position and the horizontal inclination angle of the roller shaft can be realized.

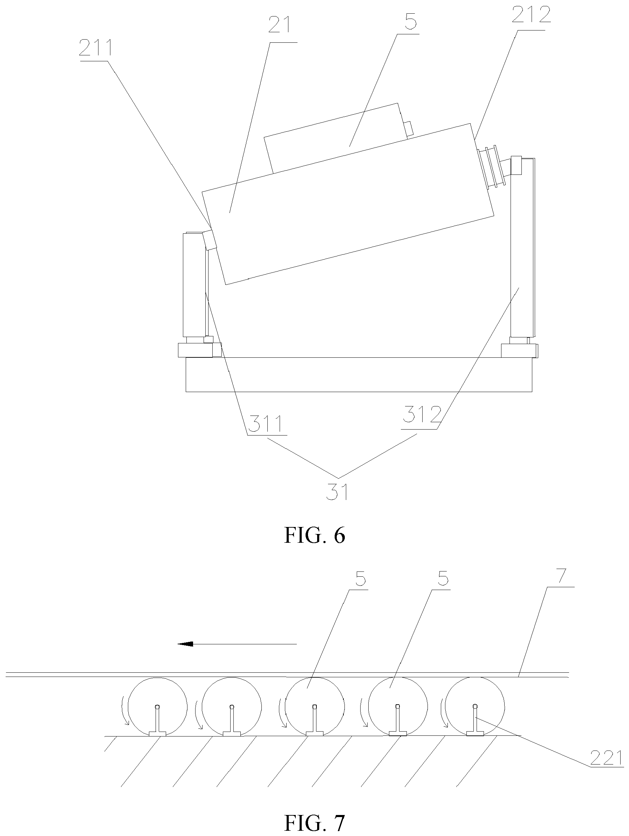

Assume that the first roller end lifting unit 311 is connected with a left end of the roller 21, and the second roller end lifting unit 312 is connected with a right end of the roller 21. During infiltration, as shown in FIG. 5, the left end of the roller can be lifted through the first roller end lifting unit 311 first, such that the height of the left end of the roller is higher than the height of the right end. Due to the effect of the gravity, the electrolytic solution in the columnar battery cell will flow from left to right, ensuring that the right side inside the columnar battery cell is fully infiltrated. After infiltrating for a period of time, as shown in FIG. 6, the left end of the roller can be lowered through the first roller end lifting unit 311 or the right end of the roller can be lifted through the second roller end lifting unit 312, such that the height of the right end of the roller is higher than the height of the left end. Due to the effect of the gravity, the electrolytic solution in the columnar battery cell will flow from right to left, such that the left side inside the columnar battery cell is fully infiltrated. This repeatedly can ensure that all parts insides the columnar battery cell can be fully infiltrated.

Preferably, the first roller end lifting unit 311 and the second roller end lifting unit 312 can be telescopic tubes, lifting arms, height adjustment blocks, and the like. In short, as long as the mechanisms can lift and lower the height of the roller end, they all are within the protection scope of the embodiments.

In some embodiments, the roller 21 is a heating roller. The heating roller is a roller with a heating function, and it is provided with an electric heating cell inside. The electric heating cell can heat the columnar battery cell on the battery placement mechanism 2 to a certain extent, thereby accelerating flow of the electrolytic solution inside the columnar battery cell, such that the electrolytic solution can flow to all parts inside the battery cell more quickly, which can improve infiltration efficiency and make the infiltration effect of all parts inside the battery cell more uniform.

Preferably, the heating roller can be an electromagnetic heating roller, a heat transfer oil heating roller, and the like. In short, as long as rollers has the heating function, they all are within the protection scope of the embodiments.

In some embodiments, as shown in FIGS. 7-9, the battery placement mechanism 2 includes an end fixing structure 22 configured to be detachably connected with one end of the columnar battery cell and drive the columnar battery cell detachably connected with it to rotate. During the use, one end of the columnar battery cell can be fixed by the first end fixing structure 22 first, and then the first end fixing structure 22 drives the columnar battery cell detachably connected with it to rotate during the rotation. During the rotation of the battery cell around the cylindrical axis, the electrolytic solution inside the battery cell will flow to all parts inside the battery cell, thereby effectively improving the infiltration efficiency of the battery cell. When the infiltration is over, just take the infiltrated columnar battery cell from the end fixing structure 22, which is efficient and convenient.

As shown in FIG. 7, during the use, one end of the columnar battery cell 5 to be infiltrated can be fixed through the end fixing structure, such that the columnar battery cell 5 to be infiltrated is relatively fixed with a placement plane, then a conveyor belt 7 is provided above the columnar battery cell 5, and the conveyor belt 7 is respectively contacted with the surface of the columnar battery cell 5 to be infiltrated, and then the driving mechanism drives the conveyor belt 7 to move left or right, further, under the action of the conveyor belt 7, a plurality of columnar battery cells 5 to be infiltrated are moved to rotate around its cylindrical axis, such that the electrolytic solution in the battery flows, and each columnar battery cell 5 to be infiltrated is fully infiltrated. For example, in FIG. 7, when the conveyor belt 7 moves from right to left, the plurality of columnar battery cells 5 to be infiltrated connected with it will be driven to rotate counterclockwise.

In some embodiments, a detachable connection between the end fixing structure 22 and one end of the columnar battery cell can be a clamping connection, and the end fixing structure 22 can adopt clamping jaws, clamping cylinder, and the like. For example, the end fixing structure 22 is a clamping jaw, which is fixed with one end of the columnar battery cell by controlling a clamping arm of the clamping jaw to tighten during the use, and then the clamping jaw is obtained to rotate to drive the columnar battery cell to rotate. When the infiltration is over, just control the clamping arm of the clamping jaw to release and remove the columnar battery cell. In other embodiments, the detachable connection between the end fixing structure 22 and the one end of the columnar battery cell can also adopt an interference fit. During the use, the two are fixed by the interference fit and can be taken out directly after the use. In short, the end fixing structure 22 is configured to fix one end of the columnar battery cell and is detachably connected with one end of the columnar battery cell. As long as the mechanisms meet the function, they all are within the protection scope of the embodiments.

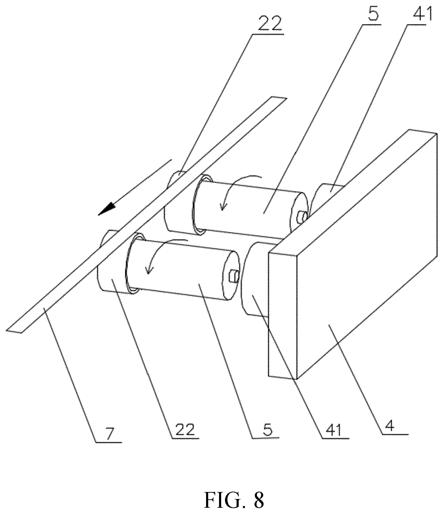

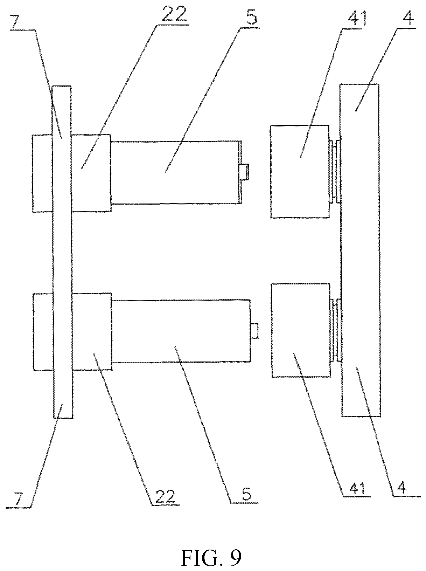

As shown in FIGS. 8 and 9, in some embodiments, the rotary infiltration apparatus for the columnar battery cell 1 further includes a base body 4 provided with a plurality of accommodating structures 41 for placing the columnar battery cell, where the region area of the accommodating structure 41 is larger than the radial cross section area of the columnar battery cell 5. During the use, when the end fixing structure 22 fixes one end of the columnar battery cell 5, the other end of the columnar battery cell 5 can be placed on the accommodating structure 41, and then the end fixing structure 22 can be driven to rotate through the conveyor belt 7, and the end fixing structure 22 drives the columnar battery cell 5 connected with it to rotate during the rotation, such that the electrolytic solution in the columnar battery cell 5 can be fully infiltrated. During the rotation of the columnar battery cell 5, the accommodating structure 41 on the base body 4 can play a good role in limiting the position and prevent the columnar battery cell 5 from separating from the end fixing structure 22. When all the columnar battery cells 5 are infiltrated, only the end fixing structure 22 at one end of the columnar battery cell 5 needs to be removed, at this time, the other end of the columnar battery cell 5 is still placed in the accommodating structure 41. Therefore, the plurality of columnar battery cells 5 that have been infiltrated can be transported by a way of transporting the base body 4, which effectively improves transporting efficiency.

Preferably, the accommodating structure 41 is an accommodating tray, a plurality of accommodating trays are arranged in an array on the base body 4, and the accommodating tray is detachably connected with the base body 4. By detachably connecting the accommodating tray with the base body 4, when it is necessary to infiltrate columnar battery cells 5 of different sizes, the accommodating tray on the base body 4 can be replaced with a size that is suitable for the radial cross section of the columnar battery cell 5 to be infiltrated currently, so as to meet the infiltrating requirements of the columnar battery cells 5 of different sizes.

Preferably, the accommodating tray protrudes from a surface of the base body, and the height of the accommodating tray is 1/4-1/2 of the total length of the columnar battery cell along the cylindrical axis. In this way, surroundings of the accommodating tray can act as a guardrail to prevent the columnar battery cell from sliding out of a predetermined region and ensure steady progress of columnar battery cell infiltrating operation or columnar battery cell transporting operation, whether in the rotation process of the columnar battery cell 5 or in the transporting process of the columnar battery cell 5.

Certainly, in other embodiments, the accommodating structure 41 may also be an accommodating groove, the accommodating groove extends from the surface of the base body 4 to the interior of the base body 4, and the depth of the accommodating groove is 1/4-1/2 of the total length of the columnar battery cell 5 along the cylindrical axis, and the groove area of the accommodating groove is slightly larger than the radial cross section area of the columnar battery cell 5. Since the accommodating groove is provided inside the base body 4, compared with a way of adopting the accommodating tray to place the other end of the base body, it can effectively improve space utilization.

Although the foregoing embodiments have been described herein, the protection scope of the present application is not limited thereby. Therefore, based on innovative ideas of the present application, changes and amendments to the embodiments described herein, or equivalent structures or equivalent process transformations made by using the description and drawings of the present application, and direct or indirect application of the above technical solutions to other related technical fields, are all included in the protection scope of patent of the present application.

## Claims

1. A rotary infiltration apparatus for a columnar battery cell, comprising:
a battery placement mechanism configured to place a plurality of columnar battery cells to be infiltrated in an array;
a driving mechanism connected with the battery placement mechanism in a transmission way and driving the battery placement mechanism to drive the columnar battery cell to rotate around a cylindrical axis of the columnar battery cell.

2. The rotary infiltration apparatus for the columnar battery cell according to claim 1, wherein the battery placement mechanism comprises a plurality of rollers provided side by side; and
a recess between a pair of adjacent rollers is configured to place the columnar battery cell to be infiltrated, at least one of the pair of adjacent rollers is a driving roller, and the driving roller is connected with the driving mechanism in the transmission way and rotates around a roller shaft under the drive of the driving mechanism.

3. The rotary infiltration apparatus for the columnar battery cell according to claim 2, further comprising:
a roller position adjusting mechanism configured to adjust a height position of the roller and/or a horizontal inclination angle of the roller shaft.

4. The rotary infiltration apparatus for the columnar battery cell according to claim 3, wherein the roller position adjusting mechanism comprises a roller end lifting unit, the roller end lifting unit is connected with at least one roller end of the roller and drives the connected roller end to lift.

5. The rotary infiltration apparatus for the columnar battery cell according to claim 4, wherein the roller end lifting unit comprises a first roller end lifting unit and a second roller end lifting unit, and the first roller end lifting unit and the second roller end lifting unit are respectively connected with two ends of the roller and independently control the lifting of each connected roller end.

6. The rotary infiltration apparatus for the columnar battery cell according to any one of claims 2 to 5, wherein the roller is a heating roller.

7. The rotary infiltration apparatus for the columnar battery cell according to claim 1, wherein the battery placement mechanism comprises an end fixing structure configured to be detachably connected with one end of the columnar battery cell and drive the columnar cell detachably connected with it to rotate.

8. The rotary infiltration apparatus for the columnar battery cell according to claim 7, further comprising:
a base body provided with a plurality of accommodating structures for placing the columnar battery cell, wherein the region area of the accommodating structure is larger than the radial cross section area of the columnar battery cell.

9. The rotary infiltration apparatus for the columnar battery cell according to claim 8, wherein the accommodating structure is an accommodating tray, a plurality of accommodating trays are arranged in an array on the base body, and the accommodating tray is detachably connected with the base body.

10. The rotary infiltration apparatus for the columnar battery cell according to claim 8 or 9, wherein the accommodating tray protrudes from a surface of the base body, and the height of the accommodating tray is 1/4-1/2 of the total length of the columnar battery cell along the cylindrical axis.

11. The rotary infiltration apparatus for the columnar battery cell according to claim 8, wherein the accommodating structure is an accommodating groove, the accommodating groove extends from the surface of the base body to the interior of the base body, and the depth of the accommodating groove is 1/4-1/2 of the total length of the columnar battery cell along the cylindrical axis.

12. The rotary infiltration apparatus for the columnar battery cell according to claim 7, wherein the battery placement mechanism further comprises a conveyor belt, the conveyor belt is provided above the columnar battery cell, the driving mechanism can drive the conveyor belt to move, and the conveyor belt can move the plurality of columnar battery cells to rotate around the cylindrical axis of the columnar battery cell.

13. The rotary infiltration apparatus for the columnar battery cell according to claim 12, wherein the conveyor belt is configured to drive the end fixing structure to rotate.
